Europäisches Patentamt

European Patent Office

Office européen des brevets

(19)

(11) Veröffentlichungsnummer: **0 227 051**
**B1**

(12) **EUROPÄISCHE PATENTSCHRIFT**

(45) Veröffentlichungstag der Patentschrift:
18.07.90

(51) Int. Cl.⁵: **F24D 11/00**, F24D 19/10

(21) Anmeldenummer: 86117672.5

(22) Anmeldetag: 18.12.86

(54) **Wärmepumpeneinrichtung mit Energiequelle zum Erwärmen und Verteilen von Brauch- und/oder Heizwasser.**

(30) Priorität: 24.12.85 CH 5540/85

(43) Veröffentlichungstag der Anmeldung:
01.07.87 Patentblatt 87/27

(45) Bekanntmachung des Hinweises auf die Patenterteilung:
18.07.90 Patentblatt 90/29

(84) Benannte Vertragsstaaten:
AT BE CH DE FR LI SE

(56) Entgegenhaltungen:
DE-A- 3 024 162

(73) Patentinhaber: Gössi, Hans, Oberdorf 25,
CH-6403 Küssnacht am Rigi(CH)

(72) Erfinder: Gössi, Hans, Oberdorf 25, CH-6403 Küssnacht
am Rigi(CH)

(74) Vertreter: EGLI-EUROPEAN PATENT ATTORNEYS,
Horneggstrasse 4, CH-8008 Zürich(CH)

## Beschreibung

Die Erfindung betrifft eine Einrichtung gemäss dem Oberbegriff des ersten Anspruches.

Die Verwendung von Wärmepumpen zum Erwärmen von Brauch- und/oder Heizwasser ist bereits bekannt. Als Wärmepumpen, die nach dem Prinzip der Kältemaschinen arbeiten, werden derzeit praktisch nur Kompressionswärmepumpen verwendet. Diese Wärmepumpen umfassen dabei Verdampfer, Kompressor, Kondensator, Expansionsventil und einen Motor für den Antrieb des Kompressors. Der Verdampfer befindet sich mit dem niedrigtemperierten Wärmereservoir im Wärmeaustausch und enthält ein flüssiges Arbeitsmedium, das bereits bei niedrigen Temperaturen verdampft, wobei die benötigte Verdampfungswärme dem Wärmereservoir entzogen wird. Das Kältemittel oder Arbeitsmedium wird dann vom Kompressor angesaugt und verdichtet, wodurch der Dampf auf ein erheblich höheres Temperaturniveau gebracht wird. Der komprimierte Dampf wird anschliessend im Komdensator wieder verflüssigt. Die dabei freiwerdende Wärmeenergie bwz. Kondensationswärme wird über einen Wärmeaustauscher an den Warmwasserkreislauf abgegeben.

Das erwärmte Wasser kann einem Warmwasserspeicher zugeführt werden, der beispielsweise auf eine Temperatur von 55°C erwärmt wird. Wenn nun ein Wärmeaustauscher in eine derartige Einrichtung integriert wird, können Probleme dadurch entstehen, dass, je nach Wahl des Kältemittels, die Obergrenze der Verdampfungstemperatur dieses Mittels überschritten wird. Diese Temperatur und der Kondensationsdruck sind nachfolgend für einige Kältemittel angegeben:

R 502  25 bar  59°C
R 12   19 bar  70°C
R 522  25 bar  62°C

Dabei nimmt der Kondensationsdruck mit steigender Temperatur zu. Da zu hohe Drücke die Wärmepumpen beschädigen können, sind sie mit Sicherheitsausrüstungen oder Hochdruckpressostaten ausgestattet, welche die Anlage bei hohem Druck automatisch ausschalten. Dadurch wird die Lebensdauer der Wärmepumpe wesentlich verlängert.

In der Sanitär- und Heizungstechnik wird nun in der Regel dasjenige Kältemittel gewählt, das den geforderten Temperaturen seitens der Verbraucher am ehesten entspricht. So wird beispielsweise bei Niedertemperatur-Heizungen meistens das Kältemittel R 522, dagegen in der Sanitärtechnik vorzugsweise das Kältemittel R 502 oder R 12 eingesetzt.

In praktisch allen Fällen muss aber die von der Wärmepumpe erzeugte Verdampferwärme voll genutzt werden. Dies bedeutet, dass dem Wärmetauscher der Wärmepumpe genau diejenige Kühlwassermenge zuzuführen ist, welche einen Anstieg des Kondensationsdruckes über den kritischen Wert hinaus verhindert.

Dies erfordert aber erfahrungsgemäss auf der Sekundärseite des Wärmeaustauschers eine sehr genaue Regulierung der Kühlwassertemperatur über das Dreiweg-Mischventil, denn schon die geringste Temperaturüberschreitung kann eine Hochdruckstörung und somit eine Betriebstörung an der Wärmepumpe und somit an der Einrichtung hervorrufen.

Ein Problem herkömmlicher Einrichtungen besteht somit darin, dass es schon bei den kleinsten Temperaturschwankungen in der Kühlwasserzufuhr bei bekannten Verfahren, vor allem dann zu unangenehmen Hochdruckstörungen der Wärmepumpe kommen kann, wenn mit der Wärmepumpe in einem hohen Temperaturbereich gearbeitet wird.

Unbefriedigend ist bei bestehenden Ausführungen die Tatsache, dass beim Betrieb von Wärmepumpeanlagen in der Sanitärtechnik bei Warmwasser-Temperaturen von 52°C, die durch den Kreislauf verursachten Verluste nicht mit der Wärmepumpe gedeckt werden können, sondern das Problem nur über kostspielige, direkte elektrische Nachheizung gelöst werden kann, was sich allerdings auf die Energiebilanz der Wärmepumpe allgemein sehr ungünstig auswirkt.

Bei den heutigen Warmwasseranlagen mit Wärmepumpe wird das Wasser im Wärmetauscher der Wärmepumpe erwärmt und über eine Verbindungsleitung und ein Sprührohr dem Speicher zugeführt. Da die Wassertemperatur im Speicher in der Regel um einige Grade tiefer liegt als das mittels des Sprührohres eingesprühte Wasser, verliert auch dieses durch die Durchmischung rasch an Wärme, was sich insbesondere deshalb auf den Betrieb ungünstig auswirkt, weil die Wassertemperatur meistens zu niedrig ist, um die Verluste im Kreislauf zu kompensieren.

Eine direkte Nachheizung mittels einer elektrischen Heizung wird dann unmöglich.

In der DE–A 3 024 162 ist ein Verfahren zum Betrieb einer mit einer Verbrennungskraftmaschine verbundenen Wärmepumpeanlage beschrieben. Diese Ausführung weicht insofern von der vorliegenden Erfindung ab, dass sie nicht mit einem Dreiwegventil ausgestattet ist, und ferner darin, dass die Rücklaufleitung nicht mit dem Warmwasseranschluss des Speichers verbunden ist.

Die in dieser DE-Schrift beschriebene, an sich einfache Ausführung ist somit im Vergleich zur vorliegenden Ausführung u. a. mit dem Nachteil behaftet, dass die Wassertemperatur nur ungenau reguliert werden kann. Zudem ist der Energieverbrauch bei der Ausführung nach der DE-Schrift grösser als bei der vorliegenden Erfindung.

Aufgabe der Erfindung ist es somit, eine Einrichtung mit einer Wärmepumpe der eingangs genannten Art zu schaffen, welche die Nachteile der bestehenden Ausführungen nicht aufweist.

Dabei soll die zu schaffende Einrichtung in erster Linie das häufige Auftreten der Hochdruckstörungen verhindern und trotzdem eine wirtschaftliche Arbeitsweise der Wärmepumpe ohne Leistungsverlust gewährleisten.

Ferner soll mit der Einrichtung das Problem der Kompensation des Kreislaufverlustes so gelöst werden, dass auf eine elektrische Nachheizung möglichst weitgehend verzichtet werden kann, so dass erhebliche Energie-Einsparungen möglich sind.

Ferner soll die zu schaffende Einrichtung so konstruiert sein, dass z.B. ein Leistungsabfall bei einer Luft/Wasser-Wärmepumpe, Spitzenentnahmen beim Verbraucher und eine allfällige Betriebsstörung der Wärmepumpe, sofort erkannt werden und ein zweiter, eventuell ein dritter Energieträger vorübergehend vollautomatisch zugeschaltet werden können, bis die entsprechende Störung behoben ist.

Diese Aufgabe ist erfindungsgemäss durch die Merkmale im Kennzeichnungsteil des ersten Anspruches gelöst.

Ausführungsformen sind in den abhängigen Ansprüchen umschrieben.

Der bedeutendste Vorteil der vorliegenden Erfindung ist in der Tatsache begründet, dass die Wärmepumpe direkt in den Brauchwasser- und/oder Heizungskreislauf eingebaut ist, während der Speicher als Puffer-, aber auch als Warmwasser-Speicher arbeitet und somit nur dann Warmwasser abgibt, wenn die Leistung der Wärmepumpe nicht in der Lage ist, Warmwasser in genügend grossen Mengen oder mit einer ausreichenden Temperatur zu liefern.

Es wird jedoch darauf hingewiesen, dass bei einer Ausführungsform, die in erster Linie für grössere Anlagen vorgesehen ist, jeweils mehrere statt nur eine Wärmepumpe und ein Speicher vorgesehen sind.

Durch die beschriebene Lösung ist es möglich, die sonst häufigen Hochdruckstörungen und die damit verbundenen Umtriebe praktisch gänzlich zu vermeiden.

Nachfolgend werden Ausführungsbeispiele der erfindungsgemässen Einrichtung anhand der Zeichnung näher erläutert. Es zeigen:

Fig. 1 eine schematische Darstellung des Aufbaus der Einrichtung,

Fig. 2 eine Variante zur Ausführung des umrahmten und mit II bezeichneten Abschnittes in Fig. 1,

Fig. 3 wie Fig. 1, jedoch mit drei Speichern und einem zusätzlichen Dreiweg-Mischventil mit Regler, und

Fig. 4 eine schematische Darstellung des Aufbaus der Einrichtung bei grösseren Analgen mit mehrstufiger Wärmepumpe.

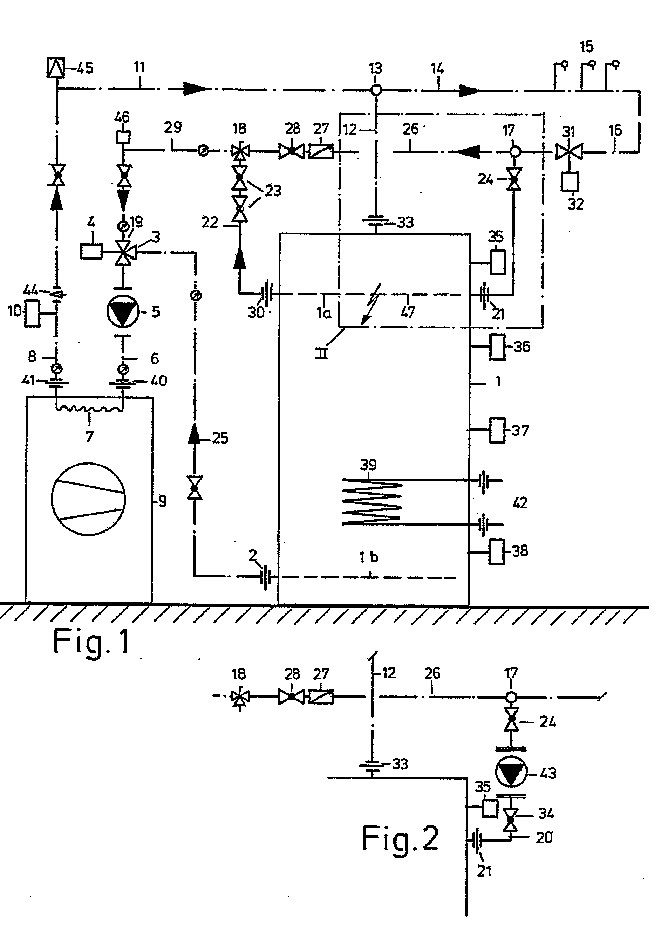

In Fig. 1 ist ein Warmwasser- oder Pufferspeicher 1 gezeigt, der im oberen Teil eine Warmwasser-1a und im unteren Teil eine Kaltwasserzone 1b aufweist. Diese Wasserschichtung ist in der Aufladung des Speichers 1 mit erwärmtem Wasser von oben nach unten begründet. Am oberen Teil ist der Speicher 1 über einen Anschluss 33 mit einer Warmwasserleitung 12 am Heiz- oder Brauchwasser-Kreislauf angeschlossen, der u.a. die Leitungsabschnitte 6,7,8,11,14,14,26 und 29 einschliesst.

Ein Mischventil 3 mit einem Antrieb 4 ist einerseits über eine Verbindungsleitung 25 mit einem Ladesaugstutzen 2 des Speichers 1 in seiner Kaltwasserzone verbunden. Andererseits ist das Mischventil 3 über den Leitungsabschnitt 29 sowie eine Leitung 22 mit der Warmwasserzone 1a über einen Ladesaugstutzen 30 des Speichers 1 verbunden.

Bei der Inbetriebnahme der Wärmepumpe 9 schliesst das Mischventil 3 die Zufuhr von kaltem Wasser aus der Verbindungsleitung 25 zur Kaltwasserzone 1b. Eine Haupt-Umwälzpumpe 5 fördert das sich in den Abschnitten 6,7,8,11,14,16,26 und 29 befindliche Wasser in einen Kreislauf durch diese Leitungsabschnitte, wobei es mittels eines Wärmeaustauschers 7 in der Wärmepumpe erwärmt wird.

Da die Leistung der Wärmepumpe 9 grösser ist als die Verluste im Kreislauf, steigt die Temperatur im Kreislauf relativ schnell. Sobald die Wassertemperatur den in einem Regler 10 eingestellten Wert annnähernd erreicht, öffnet das Mischventil 3 die Kaltwasserzufuhr. Das kalte Wasser fliesst vom Speicher 1 durch die Verbindungsleitung 25, wobei die Warmwasserzufuhr durch den Leitungsabschnitt 29 um die gleiche Menge so lange gedrosselt wird, bis die Warmwassertemperatur mit dem Regler-Sollwert übereinstimmt, der von Höchst- oder Grenztemperaturen unabhängig ist.

Wenn nun beispielsweise 30 l kaltes Wasser durch die Verbindungsleitung 25 dem Speicher 1 entzogen wird, fliesst die gleiche Menge warmes Wasser entsprechend dem Sollwert des Reglers 10 über die Leitung 11 oder 20 zum Speicher 1, der nun langsam von oben nach unten erwärmt oder aufgeladen wird. Falls ein Ventil 31 mit Antrieb 32 während der Nacht geschlossen bleibt, erfolgt die Aufladung des Speichers 1 über die Leitungsabschnitte 11 und 12, und nicht mehr über die Leitungen 14,16. Auf diese Weise ist sowohl am Tag, wie während der Nacht eine einwandfreie Regulierung des Mischventils 3 mit Antrieb 4 gewährleistet und somit die richtige Temperatur des Wassers zur Kühlung des Wärmetauschers 7 der Wärmepumpe 9 gewährleistet. Infolgedessen sind Hochdruckstörungen ausgeschlossen.

Aus Fig. 1 geht hervor, dass das im Wärmetauscher 7 der Wärmepumpe 9 erwärmte Wasser durch die Verbindungsleitung 8,11,14 direkt zum Verbraucher und anschliessend durch die Leitung 16,20,21 zurück zum Speicher 1 fliesst. Da das erwärmte Wasser in einem Rohr wärmegebündelt dem Verbraucher zugeleitet wird, ist der Temperaturabfall derart gering, dass die Temperatur beim Verbraucher hoch genug ist, so dass auf eine elektrische Nacherwärmung verzichtet werden kann.

Durch den Wegfall der Nacherwärmung werden bedeutende Kosten und Energie eingespart, was sich anhand des folgenden Beispieles verdeutlichen lässt. Bei einem grösseren Bauvorhaben mit 95 Wohneinheiten, einem Strompreis von Fr. 0.25 kW/h und einem stündlichen Verlust von 25 kW betragen die Kosten jährlich ca. Fr. 20 000.--. Bei Verwendung einer Wärmepumpe für die Auf- und Nachheizung kann dieser Betrag um über Fr 14 000.-- auf weniger als Fr. 6 000.-- gesenkt werden.

Ferner kann der Kreislauf während der Nacht, beispielsweise von 24 bis 6 Uhr, über das Ventil 31 und den Antrieb 32 abgestellt werden, um weitere Verluste zu vermeiden und somit Energie einzusparen.

Bei der vorliegenden Ausführung ist es aber ohne weiteres möglich, die Kreislaufverluste über die Wärmepumpe vollumfänglich zu decken.

Es ist ausserordentlich schwierig, eine Luft/Wasser-Wärmepumpe richtig zu dimensionieren, da einerseits die Leistung der Wärmepumpe sehr stark von den äusseren Bedingungen, z.B. der Aussentemperatur, und andererseits aber auch von Verhalten der Verbraucher abhängt, die sehr unterschiedliche Warmwasser- und Wärmeleistungen verlangen.

Infolgedessen hat sich eine Auslegung auf eine mittlere Leistung als sinnvoll erwiesen.

Damit die Einrichtung Verbraucherspitzen rechtzeitig erkennt und kompensiert, ist ein Elektro-Register zur Steuerung zusätzlicher Energiezufuhr vorgesehen, das auf der Höhe des Saugstutzens 30 am Speicher 1 eingebaut ist. Das Register besteht aus mindestens zwei Stufen, die einen dosierten Energieeinsatz ermöglichen.

Der Thermostat 35 vergleicht ständig die gemessene Temperatur mit dem eingestellten Sollwert und schaltet die erste Stufe des Registers hinzu, wenn dieser Wert unterschritten wird, und zwar so lange, bis der eingestellte Sollwert wieder erreicht ist.

Wenn die Temperatur wegen unzureichender Registerleistung weiter absinkt, bewirkt die dritte und letzte Stufe die Zuschaltung des Pumpenwasser-Registers 39 über den Thermostaten 35. Da die Registerleistung allein eine 100%-ige Deckung des Spitzenbedarfs erbringt, ist auf jeden Fall ein störungsfreier Betrieb gewährleistet.

Der Einschaltbefehl der Wärmepumpe erfolgt über den Thermostaten 35 sobald der Sollwert unterschritten ist. Der Ausschaltbefehl kann sich je nach Grösse der Anlage und den örtlichen Strompreis-Verhältnissen (Tag/Nachttarif), entweder auf der Höhe der Thermostaten 36 während des Hochtarifs oder auf der Höhe des unteren Thermostatens 38 zum Niedertarif befinden.

Die Einrichtung lässt sich problemlos über ein zentrales Leitsystem, beispielsweise mittels eines Computers, steuern.

Bei der beschriebenen Einrichtung ist das Pumpwasser-Register 39 so angeordnet, dass unterhalb des Registers immer noch eine genügend grosse Kaltwasserzone bestehen bleibt.

Der Saugstutzen 2 befindet sich unten am Speicher 1, in der Kaltwasserzone 1b, und ist über eine Verbindungsleitung 25 mit dem vom Antrieb 4 betätigten Mischventil 3 verbunden. Durch diese Verbindung wird kaltes Wasser der Haupt-Umwälzpumpe 5, dem Leitungsabschnitt 6 sowie dem Einlaufanschluss 40 des Wärmeaustauschers 7 der Wärmepumpe 9 zugeführt. Von dort fliesst das nunmehr leicht erwärmte Wasser durch den Auslaufanschluss 41 der Wärmepumpe und ein Ausgangsrohr 8 an einem Thermostaten oder Regler 10 vorbei, und dann ferner durch einen Leitungsabschnitt 11 bis zu einer Abzweigung 13, wo der Kreislauf über die Leitung 12 mit der Warmwasserzone 1a des Speichers 1 verbunden ist. Von der Abzweigung 13 weg fliesst das Wasser durch den Leitungsabschnitt 14 zu den Zapfstellen oder den Heizkörpern 15. Von hier weg fliesst das Wasser durch den Leitungsabschnitt 16 durch ein Motorventil 31, das von einem Antrieb 32 betätigt wird. Vom Ventil 31 weg kann das Wasser entweder auf dem direkten Weg durch den Leitungsabschnitt 26, eine Rückschlagklappe 27 und ein Abstellventil 28 bis zur Abzweigung 18, oder auf einem Umweg durch den Speicher bis zu dieser Abzweigung fliessen. Mittels eines Ventils 24 auf der Eingangsseite 21 sowie eines Drossel- und Abstellventils 23 auf der Ausgangseite 30 des Speichers 1 kann die ihm zugeführte oder die ihm entnommene prozentuale Wassermenge, auch an der Abzweigung 13, genau eingestellt werden. Dadurch ist es möglich, die Temperatur im Kreislauf genau zu regulieren, und somit eine Hochdruckausschaltung der Wärmepumpe 9 zu vermeiden. Im Leitungsabschnitt 26 ist zusätzlich zum Ventil 28 eine Rückschlagklappe im Drosselventil 27 angeordnet, die eine Gegenströmung unter bestimmten Bedingungen verhindert.

Damit die Temperatur bei starkem Brauchwasserbezug oder bei starker Kälte nicht zu sehr absinkt, ist eine Erwärmung des Wassers im Speicher 1 mittels eines Heizelementes 39 vorgesehen, das entweder von einer elektrischen oder thermischen Quelle gespeist werden kann. Somit kann das Element 39 als elektrisches Heizelement oder als Wärmeaustauscher ausgebildet sein, der auch von Solarenergie gespiesen werden kann.

Zur Überwachung der Temperatur in den einzelnen Wasserschichten im Speicher 1, sind von einander beabstandete Thermoelemente (35-38) in der Höhenrichtung des Speichers 1 angeordnet. Diese Elemente können Teile einer Temperatursteuervorrichtung bilden, wobei die ermittelten Werte mittels eines Computers ausgewertet und entsprechende Steuerbefehle automatisch getroffen werden können.

Der Thermostat oder Regler 10 dient zur Steuerung des Mischventils 3 mittels des Antriebes 4. Falls die am Regler 10 eingestellte Temperatur überschritten wird, öffnet das Ventil 3 die Leitung zur Kaltwasserzone im Speicher 1 und drosselt die Warmwasserzufuhr vom Kreislauf. Durch diese Kaltwasserzufuhr wird das Warmwasser durch die Leitung 12 zum Speicher 1 gedrängt. Wenn dagegen die Temperatur im Kreislauf zu niedrig ist, wird die Kaltwasserzufuhr durch die Leitung 25 gedrosselt und die Warmwasserzufuhr durch die Leitung 12 erhöht.

Aus Fig. 2 geht hervor, dass eine Umwälzpumpe 43 und ein Drosselventil 34 in die Leitung 21 eingebaut werden können. In der Weise ist es möglich, die Strömungsmenge in diesem Zweig genauer einzustellen oder nach Bedarf zu regeln. Es ist ferner möglich, eine nicht dargestellte Umwälzpumpe und eine gezeigtes Drosselventil in die Leitung 12 zur besseren Steuerung der Strömung in diesem Leitungsabschnitt einzubauen.

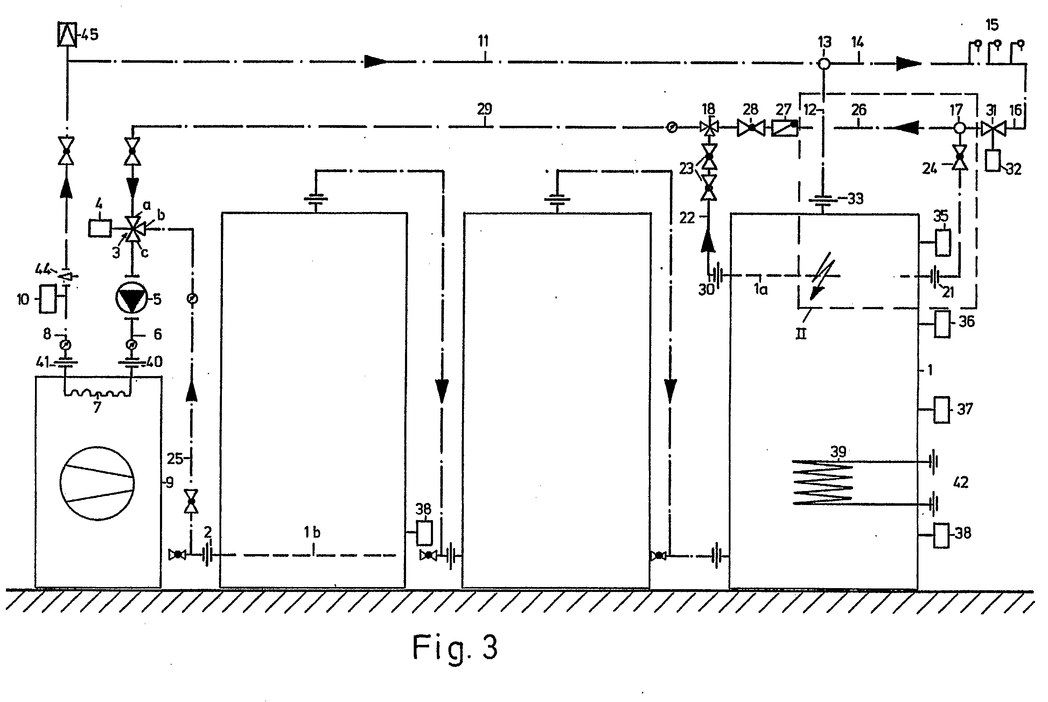

Fig. 3 zeigt eine Ausführung, bei welcher der Speicher 1 einer unzureichende Wasserkapazität aufweist, weshalb ein zweiter 1' und ein dritter Speicher 1" vorgeschaltet sind.

Die vorangehend beschriebene Ausführung ist hervorragend für eine computerisierte, automatische Steuerung geeignet, wobei die vorhandene Temperatur vom Thermostaten 10 ermittelt wird. Auf Grund dieser Messung werden in erster Linie die Antriebe 4 und 32 betätigt. Es können aber ferner die Ventile 24, 28, 34 sowie ein nicht gezeigtes Ventil in der Leitung 12 betätigt werden. Zudem kann die Zusatzheizung 39 in diese Steuerung eingeschlossen werden. Als weitere Messstellen können die Thermostaten 35 bis 38 als Grundlage für die Steuerbefehle an die Ventilantriebe benutzt werden.

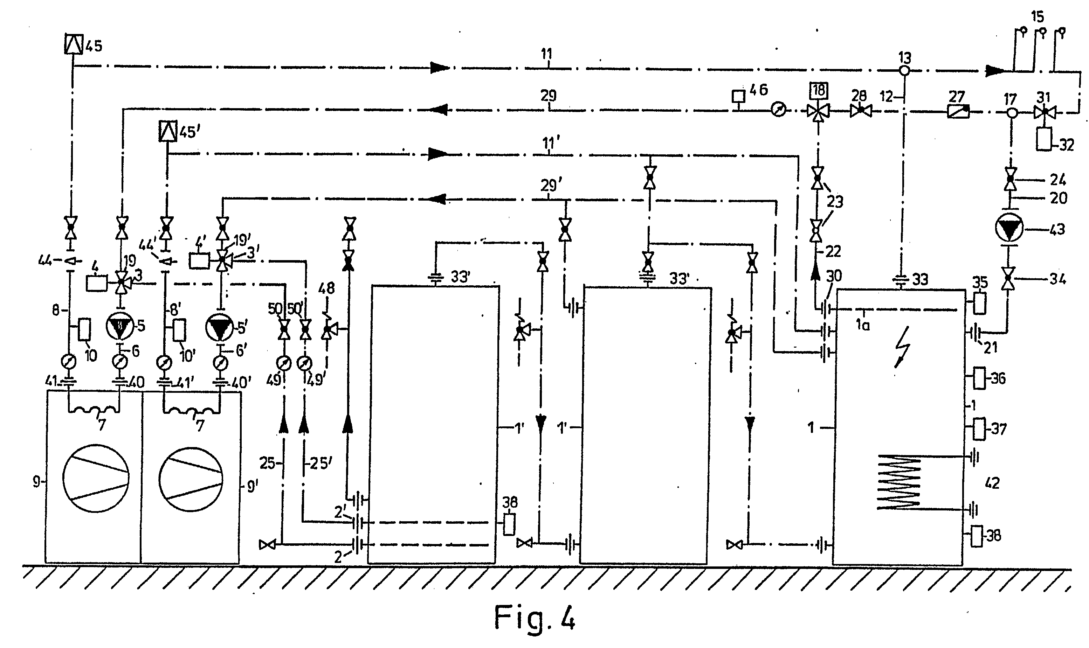

In Fig. 4 ist eine der Fig. 3 ähnliche Ausführung mit zwei statt einer Wärmepumpe, insbesondere für grössere Anlagen, dargestellt. Dadurch entstehen zwei von einander unabhängige Kreisläufe, wobei die erste Wärmepumpe 9 im Kreislauf 6,8,11, 17,21,23,28,29 zum Decken der Kreislaufverluste, während die zweite Wärmepumpe 9' über den Kreislauf 6',8', 11', 17', 21', 23',28' , 29' zur Erwärmung der Speicher dient. Die Figuren zeigen ferner Drosselventile 44,44', Entlüftungsventile 45, 45', PI-Regler 46, Elektroregister 47, sicherheitsventile 48, Thermpmeter 49 sowie Abstellventile 50 zur Überwachung der Einrichtung.

Wie bereits erwähnt, liegt ein Vorteil der vorliegenden Ausführung darin, dass der Speicher 1 nicht nur als Quelle, sondern auch als Puffer für den Kreislauf eingesetzt wird. Dadurch ist es möglich, die Temperaturverhältnisse in der Wärmepumpe viel besser und vor allem genauer zu regeln als dies bisher der Fall war. Infolgedessen kommen die bisher häufigen Probleme mit den hohen Temperaturen und den damit verbundenen Hochdruckausfällen bei der vorliegenden Erfindung praktisch nicht mehr vor. Ein weiterer Vorteil der vorliegenden Ausführung besteht darin, dass sie, zur Senkung der Betriebskosten, problemlos in bestehende Anlagen eingebaut werden kann.

**Patentansprüche**

1. Wärmepumpe-Einrichtung mit Energiequelle zum Erwärmen und Verteilen von Brauch- und/oder Heizwasser, mit mindestens einem Speicher und einem Warmwasser-Kreislauf mit Haupt-Umwälzpumpe, der sich durch den Wärmeaustauscher (7) der Wärmepumpe (9) erstreckt und über einen Warmwasseranschluss am Speicher angeschlossen ist, dadurch gekennzeichnet, dass der von der Haupt-Umwälzpumpe (5) angetriebene Kreislauf (6, 7, 8, 11, 14, 16, 26, 29) Leitungsabschnitte einschliesst, die über eine Umwegleitung (20, 22) mit einem ersten und einem zweiten Anschluss (21, 30) in der Warmwasserzone des Speichers (1) verbunden sind, und dass der Kreislauf über einen Saugstutzen (2) mit der Kaltwasserzone des Speichers (1) für die Kaltwasserzufuhr verbunden ist.

2. Einrichtung nach Anspruch 1, dadurch gekennzeichnet, dass das eine Ende (21) der Umwegleitung (20, 22) über ein Ventil (34), eine Zusatz-Umwälzpumpe (43) und ein weiteres Ventil (24) zwischen zwei Abschnitten (16, 26) der Kreislaufleitung angeschlossen ist (Fig. 2).

3. Einrichtung nach Anspruch 2, dadurch gekennzeichnet, dass der Speicher-Anschluss (30) der Umwegleitung (22) mit einem Drossel- und Abstellventil (23) an einer Abzweigung (18) in der Kreislaufleitung verbunden ist.

4. Einrichtung nach Anspruch 3, dadurch gekennzeichnet, dass zwei Ventile (23, 24) der Umwegleitung (20, 22) durch einen Leitungsabschnitt (26) verbunden sind, der ferner ein Abstellventil (28) mit einer Rückschlagklappe (27) verbindet.

5. Einrichtung nach Anspruch 4, dadurch gekennzeichnet, dass der im Kreislauf oder Regelkreis (5, 6, 8, 11, 14, 16, 22, 24, 29) einbezogene Speicher (1) in der Kaltwasserzone (10) mit einem Ladesaugstutzen (2), in der Heisswasserzone (1a) mit einem Kreislaufstutzen (21), einem Warmwasserstutzen (33), einem zusätzlichen Regelkreislaufstutzen (30), einem Elektroeinsatz (47) und einem Pumpwasserregister (39) ausgestattet ist.

6. Einrichtung nach Anspruch 5, dadurch gekennzeichnet, dass ein erster Anschluss (3a) eines Mischventils (3) über eine Leitung (29), eine Abzweigung (18) und eine weitere Leitung (22,30) direkt mit der Heisswasserzone des Speichers (1) verbunden ist, dass ein zweiter Anschluss (3b) über eine Verbindungsleitung (25) an einem Anschluss (2) der Kaltwasserzone des Speichers (1) angeschlossen ist, dass ein dritter Anschluss (3c) über die Pumpe (5) und eine Leitung (6) mit dem Eingang des Wärmeaustauschers (7) verbunden ist, und dass der Antrieb (4) des Mischventils (3) über den am Ausgang (8) des Wärmeaustauschers (7) angeordneten Regler (10) temperaturabhängig gesteuert ist.

7. Einrichtung nach Anspruch 6, dadurch gekennzeichnet, dass in der Strömungsrichtung des Wassers, vor der Abzweigung (17) der Umwegleitung (20) ein Magnet- oder Motorventil (31) in den Leitungsabschnitt (16) eingebaut ist, dessen Antrieb (32) mittels eines Zeitimpulses steuerbar ist.

8. Einrichtung nach einem der Ansprüche 1 bis 7, dadurch gekennzeichnet, dass die Haupt-Umwälzpumpe (5) für die gleichzeitige Funktion als Lade-, Magro- und Kreislaufpumpe verwendbar ist.

9. Einrichtung nach einem der Ansprüche 1 bis 7, dadurch gekennzeichnet, dass im oberen Bereich der Warmwasserzone (1a) des Speichers (1) ein Gerät (35) zur Messung eines Temperaturunterschiedes vorhanden ist, das die Einschaltung einer Heizvorrichtung, sofern ein Sollwert nicht erreicht ist, und ferner die Freigabe eines Pumpenwarmwasser-Registers (39) zur Nacherwärmung bewirkt.

10. Einrichtung nach Anspruch 9, dadurch gekennzeichnet, dass sie weitere Geräte (36-38) zur Temperaturmessung in verschiedenen Wasserschichten im Speicher (1) und zum Ein- und Ausschalten der Heizvorrichtung beim Unter- und Überschreiten einer Solltemperatur aufweist.

11. Einrichtung nach Anspruch 10, dadurch gekennzeichnet, dass in der Verbindungsleitung (6,8,11) zwischen dem Mischventil (3) und der Abzweigung (13) für den Warmwasseranschluß ein manuell oder automatisch betätigbares Kalibrier- oder Drosselventil (44) zur Regulierung der Fördermenge der Umwälzpumpe (5) oder der Strömungsgeschwindigkeit zur Herstellung eines Temperaturgefälles zwischen dem Ein- und dem Ausgang (41) der Wärmepumpe (9) eingebaut ist.

12. Einrichtung nach einem der Ansprüche 1 bis 11, dadurch gekennzeichnet, dass die Wärmepumpe zweistufig ausgebildet, bzw. mit zwei Kompressoren ausgestattet ist, wobei die Leistung der ersten Stufe dem Kreislaufverlust entspricht oder grösser ist.

13. Einrichtung nach einem der Ansprüche 1 bis 12, dadurch gekennzeichnet, dass sie mehrere, in Reihe geschaltete Speicher (1,1',1") für Warmwasser zur Erhöhung der Wassertemperatur aufweist.

14. Einrichtung nach Anspruch 13, dadurch gekennzeichnet, dass die Speicher (1,1',1") und ggfs. die Leitungsabschnitte Geräte zur Temperaturmessung in unterschiedlichen Wasserschichten und in verschiedenen Teilen des Kreislaufes aufweisen, und dass die Messresultate einem zentralen Messorgan zur Auswertung zuführbar sind, dem eine Computersteuerung zur Konstanthaltung der Temperatur zugeordnet ist.

15. Einrichtung nach Anspruch 6, dadurch gekennzeichnet, dass die mit der Leitung (29) vom Mischventil (3) verbundene Abzweigung (18) mit einem manuell oder automatisch steuerbaren Dreiwegmischventil ausgestattet ist, dessen Regulierung über einen PI-Regler (46) im Leitungsabschnitt (29) zwischen dem Mischventil (3) und der genannten Abzweigung (18) erfolgt.

16. Einrichtung nach einem der vorangehenden Ansprüche, dadurch gekennzeichnet, dass sie mindestens zwei voneinander unabhängige Wärmepumpen (9,9') einschliesst, von denen die erste (9) in einem ersten Kreislauf (6,8,11,17,21,22,23,28, 29) zum Decken der Kreislaufverluste angeordnet ist, während sich die zweite (9') in einem zweiten Kreislauf (6' ,8',11', 17',21',23',28',29') zur Erwärmung der Speicher (1,1',1") befindet.

## Claims

1. Heat pump installation with a source for heating and distributing of heating and/or sanitary hot water, with at least one reservoir and a hot water circuit with main circulating pump, that extends through the heat exchanger of the heat pump and is connected via a hot water connection on the reservoir, characterized in that the circuit (6, 7, 8, 11, 14, 16, 26, 29) driven by the main circulating pump (5) comprises pipe sections, connected via a bypass line (20, 22) to a first and a second connection (21, 30) in the hot water zone of the reservoir (1), and that the circuit is connected via a suction pipe (1) to the cold water supply.

2. Installation according to claim 1, characterized in that one end (21) of the bypass line (20, 22) is connected via a valve (34), an additional pump (43) and a further valve (24) between two sections (16, 26) of the circuit pipe (Fig. 2).

3. Installation according to claim 2, characterized in that the reservoir connection (30) of the bypass line (22) is connected with a throttle and disconnecting valve (23) to a branch (18) in the circuit line.

4. Installation according to claim 3, characterized in that two valves (23, 24) of the bypass line (20, 22) are connected by a pipe section (26), that also joins a disconnecting valve (28) to a check valve (27).

5. Installation according to claim 4, characterized in that the reservoir (1) included in the circuit or control circuit (5, 6, 8, 11, 14, 16, 22, 24, 29) in the cold water zone (10) is equipped with a charge suction connection (2), in the hot water zone (1a) with a circuit connection (21), a hot water connection (33), an additional control circuit connection (30), an electric insert (47) and a pump water register (39).

6. Installation according to claim 5, characterized in that a first connection (3a) of a mixing valve (3) is directly connected with a hot water zone of the reservoir (1) via a pipe (29), a branch pipe (18) and a further pipe (22, 30), that a second connection (3b) is joined to a connection (2) of the cold water zone of the reservoir (1), that a third connection (3c) is connected with the inlet of the heat exchanger (7) via a pump (5) and a pipe (6), and that the drive (4) for the mixing valve (3) is temperature dependent controlled over regulator (10) at the outlet (8) of the heat exchanger (7).

7. Installation according to claim 6, characterized in that in the flow direction of the water, before the branch (17) of the bypass line (20), a magnet or motor valve (31) is built into the pipe section (16), the drive (32) of which being controlled by means of an impulse.

8. Installation according to one of the claims 1 to 7, characterized in that the main circulation pump (5) simultaneously can be used as charging, magro and circuit pump.

9. Installation according to one of the claims 1 to 7, characterized in that in the upper area of the hot water zone (1a) of the reservoir (1) an apparatus (35) for measuring the temperature difference is included, that turns on a heating device, if the nominal value has not been reached, and furthermore causes a pump water register (39) to be activated for after-heating.

10. Installation according to claim 9, characterized in that it comprises further apparatuses (36–38) for temperature measurements at different water levels in the reservoir (1) and for switching off and on of the heating device, if a nominal temperature is surpassed in the down- and upwards direction.

11. Installation according to claim 10, characterized in that in the connecting line (6, 8, 11) between the mixing valve (3) and the branch line (13) for the hot water connection a manually or automatically operated calibrating or throttle valve (44) for the control of the discharge of the circulation pump (5) or of the flow speed for causing a temperature drop between the inlet and the outlet (41) of the heat pump (9) has been provided.

12. Installation according to one of the claims 1 to 11, characterized in that the heat pump has two steps or is provided with a compressor, whereby the output of the first step corresponds to or is larger than the circuit loss.

13. Installation according to one of the claims 1 to 12, characterized in that it comprises several series connected reservoirs (1, 1', 1") for hot water for increasing the water temperature.

14. Installation according to claim 13, characterized in that the reservoir (1, 1', 1") and possibly the pipe sections comprises apparatuses for measuring the temperature at different water levels and in different parts of the circuit, and that the measurement results can be forwarded to a central measuring device for evaluation, to which a computer control for the maintenance of a constant temperature is connected.

15. Installation according to claim 6, characterized in that the branch (18) connected to the pipe section (29) from the mixing valve (3) is provided with a manually or automatically controlled three way mixing valve, the control of which being carried out via a PI-regulator (46) in the pipe section (29) between the mixing valve (3) and the mentioned branch (18).

16. Installation according to one of the preceding claims, characterized in that it comprises at least two heat pumps (9, 9'), which are independent from each other, of which the first (9) is arranged in a first circuit (6, 8, 11, 17, 21, 22, 23, 28, 29) to cover the circuit losses, while the second (9') is located in a second circuit (6', 8', 11', 17', 21', 23', 28', 29') for the heating of the reservoir (1, 1', 1").

**Revendications**

1. Dispositif à pompe à chaleur avec source d'énergie pour chauffer et distribuer de l'eau de service et/ou de l'eau de chauffage, comportant au moins un accumulateur et un circuit d'eau chaude avec pompe principale de circulation, qui traverse l'échangeur de chaleur (7) de la pompe à chaleur (9) et qui est raccordé à l'accumulateur, par le branchement d'eau chaude, caractérisé en ce que le circuit (6, 7, 8, 11, 14, 16, 26, 29), entraîné par la pompe principale de circulation (5), comprend des sections de tuyauterie qui sont reliées, par une dérivation (20, 22), à un premier et à un deuxième branchements (21, 30), dans la zone d'eau chaude de l'accumulateur (1) et en ce que le circuit est relié à la zone d'eau froide de l'accumulateur (1), par une tubulure d'aspiration (2), pour l'arrivée d'eau froide.

2. Dispositif selon la revendication 1, caractérisé en ce qu'une extrémité (21) de la dérivation (20, 22) est raccordée entre deux sections (16, 26) de la tuyauterie du circuit, par une vanne (34), une pompe de circulation supplémentaire (43) et une autre vanne (24) (figure 2).

3. Dispositif selon la revendication 2, caractérisé en ce que le branchement d'accumulateur (30) de la dérivation (22) est relié à une vanne d'étranglement et d'arrêt (23), d'un départ (18) de la tuyauterie du circuit.

4. Dispositif selon la revendication 3, caractérisé en ce que deux vannes (23, 24) de la dérivation (20, 22) sont reliées par une section de tuyauterie (26) qui relie entre outre une vanne d'arrêt (28) à un clapet de retenue (27).

5. Dispositif selon la revendication 4, caractérisé en ce que l'accumulateur (1), inséré dans le circuit ou le circuit de régulation (5, 6, 8, 11, 14, 16, 22, 24, 29) est équipé, dans la zone d'eau froide (10), d'une tubulure d'aspiration de charge (2) et dans la zone d'eau chaude (1a) d'une tubulure de circuit (21), d'une tubulure d'eau chaude (33), d'une tubulure de circuit de régulation supplémentaire (30), d'un insert électrique (47) et d'un registre d'eau de pompe (39).

6. Dispositif selon la revendication 5, caractérisé en ce qu'un premier branchement (3a) d'une vanne de mélange (3), est directement relié à la zone d'eau chaude de l'accumulateur (1), par une conduite (29), un départ (18) et une autre conduite (22, 30), en ce qu'un deuxième branchement (3b) est raccordé à un branchement (2) de la zone d'eau froide de l'accumulateur (1), par une conduite de liaison (25), en ce qu'un troisième branchement (3c) est relié à l'entrée de l'échangeur de chaleur (7), par la pompe (5) et une conduite (6) et en ce que l'entraînement (4) de la vanne de mélange (3) est commandé, en fonction de la température, par le régulateur (10), disposé à la sortie (8) de l'échangeur de chaleur (7).

7. Dispositif selon la revendication 6, caractérisé en ce qu'on monte dans la section de tuyauterie (16), en amont du départ (17) de la dérivation (20), dans le sens de l'écoulement de l'eau, une vanne magnétique ou motorisée (31) dont l'entraînement (32) est commandé par une impulsion de temps.

8. Dispositif selon l'une des revendications 1 à 7, caractérisé en ce qu'on utilise la pompe principale de circulation (5) pour la fonction simultanée de pompe de charge, de pompe Magro et de pompe de circulation.

9. Dispositif selon l'une des revendications 1 à 7, caractérisé en ce qu'on prévoit, dans la région supérieure de la zone d'eau chaude (1a) de l'accumulateur (1), un appareil (35) pour la mesure d'une différence de température, qui déclenche un dispositif de chauffage si une valeur de consigne n'est pas atteinte et qui libère, en outre, un registre d'eau chaude de pompe (39) pour un chauffage complémentaire.

10. Dispositif selon la revendication 9, caractérisé en ce qu'il comporte d'autres appareils (36–38) pour la mesure de température dans différentes couches d'eau de l'accumulateur (1) et pour la mise en marche et l'arrêt du dispositif de chauffage lorsque la température de consigne n'est pas atteinte ou lorsqu'elle est dépassée.

11. Dispositif selon la revendication 10, caractérisé en ce qu'on monte dans la conduite de liaison (6, 8, 11), entre la vanne de mélange (3) et le départ (13), pour le branchement d'eau chaude, une vanne de calibrage ou d'étranglement (44), actionnée manuellement ou automatiquement, pour réguler le débit de la pompe de circulation (5) ou la vitesse d'écoulement, afin de réaliser un gradient de température entre l'entrée et la sortie (41) de la pompe de chaleur (9).

12. Dispositif selon l'une des revendications 1 à 11, caractérisé en ce que la pompe de chaleur est à deux étages ou est équipée de deux compresseurs, la puissance du premier étage étant égale ou supérieure à la perte en circuit.

13. Dispositif selon l'une des revendications 1 à 12, caractérisé en ce qu'il comporte plusieurs accumulateurs (1, 1', 1") montés en série, pour l'eau chaude, afin d'accroître la température de l'eau.

14. Dispositif selon la revendication 13, caractérisé en ce que les accumulateurs (1, 1', 1") et éventuellement les sections de tuyauterie comportent des appareils de mesure de température, dans différentes couches d'eau et dans différentes parties du circuit, et en ce que les résultats mesurés sont envoyés à un organe de mesure central, pour être interprétés, cet organe de mesure étant associé à une commande par ordinateur, afin de maintenir constante la température.

15. Dispositif selon la revendication 6, caractérisé en ce que le départ (18), relié à la conduite (29), par la vanne de mélange (3), est équipé d'une vanne de mélange à trois voies, à commande manuelle ou automatique dont la régulation se fait par un régulateur PI (46) dans la section de tuyauterie (29), entre la vanne de mélange (3) et le départ (18) mentionné.

16. Dispositif selon l'une des revendication ci-dessus, caractérisé en ce qu'il comprend au moins deux pompes à chaleur (9, 9') indépendantes l'une de l'autre, dont la première (9) est montée dans un premier circuit (6, 8, 11, 17, 21, 22, 23, 28, 29), pour couvrir les pertes en circuit, tandis que la deuxième (9') se trouve dans un deuxième circuit (6', 8', 11', 17', 21', 23', 28', 29'), pour chauffer l'accumulateur (1, 1', 1").

Fig. 1

Fig. 2

Fig. 3

EP 0 227 051 B1

Fig. 4

EP 0 227 051 B1